# EUROPEAN PATENT APPLICATION

(11) **EP 4 101 693 A1**
(43) Date of publication of application: **14.12.2022**
(21) Application number: 22178088.5
(22) Date of filing: 09.06.2022
(51) Int. Cl.: B60P 3/03, B60P 3/00

(54) **VEHICLE FOR TRANSPORTING AND DELIVERING ARTICLES**

(30) Priority: 09.06.2021 IT 202100015104
(71) Applicant: Gema S.r.l., 50013 Campi Bisenzio (FI) (IT)
(72) Inventor: CAMELLINI, Giancarlo, Campi Bisenzio (FI) (IT); LULLI, Alessandro, Campi Bisenzio (FI) (IT)
(74) Representative: Manzella & Associati

(57) **Abstract**

The vehicle for transporting and delivering articles includes a containment compartment (3) and a driver's cabin. The compartment (3) includes inside a shelf structure (31) for containing said articles (11) to be delivered. The shelf structure (31) comprises at least one support element (32), to support a plurality of said articles (11), which is inclined with respect to a substantially horizontal plane

## Description

### Technical field

The present invention relates to a commercial vehicle for the transport and delivery of articles.

### Background of the invention

The use of commercial vehicles equipped for home delivery of articles, such as parcels, envelopes and the like, has been known for some time.

A common type of vehicle comprises a rear compartment in which the articles to be delivered are arranged and a driver's cabin, possibly separated from the compartment by a partition wall. The compartment is accessible through a door, located laterally or in the rear part of the vehicle, opposite to the driver's cabin. The compartment is generally provided with shelving structures for containing the articles to be delivered, equipped with support shelves on which the articles are safely arranged. The use of gravity shelves is also known, that is structures for containing articles whose shelves are inclined in such a way as to exploit gravity to facilitate the delivery operator in the article picking phase.

A problem complained about in the use of the aforementioned commercial vehicles concerns the working conditions of the delivery operator as, in order to pick up the articles to be delivered, he has to lift and move them in a non-ergonomic way.

A further disadvantage is related to the picking phase of the articles and in particular in the event that a plurality of articles are deposited on an inclined support shelf. More precisely, when the operator picks up a first article, the subsequent articles, due to the effect of gravity, slide uncontrollably in the direction of the operator. It should also be considered that this possibility is more dangerous for the operator in the case of articles having a significant weight. Furthermore, the articles sliding along the support surface and stopping abruptly at the end of the stroke risk being damaged.

The need is therefore felt to devise a vehicle that solves the problems mentioned above.

### Disclosure

The task of the present invention is that of solving the aforementioned problems, devising a vehicle which allows the delivery of articles to be operated in an optimal manner.

Within this aim, a further object of the invention is to provide a vehicle for the delivery of articles which allows the operator to handle the articles in an easy and safe way, both during the deposit and removal steps of the articles from the shelf structures of the vehicle.

A purpose of the invention is to provide a vehicle that allows the operator to assume ergonomic positions during the deposit and removal of articles.

A further object of the invention is to provide a vehicle for the transport and delivery of articles with a simple construction and functional concept, with reliable operation, versatile use, and relatively low cost.

The aforementioned purposes are achieved, according to the present invention, by the vehicle for the transport and delivery of articles according to claim 1.

The vehicle for transporting and delivering articles comprises a driver's cabin and a containment compartment equipped internally with a shelf structure for containing said articles, said shelf structure comprising at least one support element capable of supporting a plurality of said articles.

According to the present invention, said support element is inclined with respect to a substantially horizontal plane to allow the discharge of said articles by exploiting the force of gravity, said at least one support element defining a support surface for said articles.

Said at least one support element is associated with at least one blocking member operable to prevent the sliding of said articles along said support element.

Preferably, said shelf structure comprises at least one said blocking member for each support element.

Advantageously, said blocking member comprises an operative portion operable alternately in order to allow the sliding of said articles along the support surface of said support element and to block the sliding of said articles along said support surface of said support element. This feature of the blocking member allows the operator to easily manage the articles, during loading or unloading, blocking them or allowing them to slide when necessary. Therefore, the problem of handling the articles in an easy and safe way is solved, both in the deposit step and in the withdrawal step from the shelf structures of the vehicle.

Preferably, said blocking member is mounted at an end portion of said supporting element.

Preferably, said operative portion is arranged at said support surface.

Preferably, said operative portion is rotatably associated with said support surface.

Preferably, said operative portion defines an abutment surface for said articles.

Preferably, said operative portion is formed by an element of elongated shape.

Advantageously, said blocking member is movable alternatively between a first configuration, in which said operative portion is substantially coplanar to said support surface of said support element or is underlying said support surface, allowing said articles to slide along said support surface, and a second configuration, in which said operative portion is raised with respect to said support surface so as to prevent the sliding of said articles. The fact that the blocking member assumes the two configurations alternately allows to manage the loading and unloading of articles in an optimal way as it is sufficient to make the blocking member assume the first configuration to load or unload an article and the second configuration when it is necessary to prevent the sliding of the article along the support surface.

Preferably in said second configuration said operative portion protrudes from said support surface of said support element so that the articles are blocked by the abutment surface of said operative portion.

Preferably, said blocking member comprises a control element, connected to said operative portion, said control element being adapted to actuate said operative portion.

Preferably, said control element can be activated by an operator to modify the configuration assumed by said operative portion.

Preferably, said operative portion is movable between said second configuration and said first configuration upon activation of said control element.

Preferably, said control element is associated with said operative portion by connection means.

Preferably said connection means comprises a transmission shaft.

According to an aspect of the invention, said control element is made up of a handle.

According to another aspect of the invention, said blocking member is associated with contrasting means adapted to exert a force on said operative portion to cause the passage of said operative portion from said first configuration, in which it is lowered, to said second configuration, in which it is raised.

Preferably said contrasting means comprises elastic means.

Preferably each said support element comprises at least one panel conforming said support surface of said articles.

Preferably, each said supporting element comprises a frame suitable for containing said articles, said frame extending peripherally with respect to said support surface.

Preferably, said frame has a rectangular shape.

Preferably, said frame comprises a pair of opposite longitudinal edges and a pair of opposite transverse edges.

Preferably, said control element is mounted on said frame.

Preferably, said control element is mounted on said transverse edge of said frame arranged at the end of the support element in which the loading and unloading of said articles takes place.

Preferably, said vehicle comprises at least one access to said containment compartment, made at least on one of the walls delimiting said containment compartment so as to unload said articles from said containment compartment and / or deposit said articles in said containment compartment.

According to a different embodiment of the invention, the vehicle comprises a blocking member designed to brake the sliding of said articles along said support surface of said support element by friction.

Advantageously, said blocking member comprises an operative element of elongated shape defined longitudinally to at least one side of said support element.

In one embodiment, said blocking member comprises first and second operative elements of elongated shape defined longitudinally by opposite sides of said support element.

Advantageously, said operative element is provided with an active surface with which a brake element is associated which is suitable for abutting, in use, said articles, generating a friction force capable of braking and retaining the same articles.

Preferably, said brake element comprises a gasket of a material of the rubber type, provided with a suitable coefficient of friction.

Preferably, said blocking member is operable by means of a control element between a first position spaced from said articles, to allow them to slide along said support surface of said support element, and a second position in which said brake element it is brought with a suitable pressure against the said articles, preventing them from sliding.

Preferably, said brake element is brought to abut said articles by elastic means.

### Description of drawings

The details of the invention will become more evident from the detailed description of a preferred embodiment of the vehicle for the transport and delivery of articles according to the invention, illustrated by way of example in the accompanying drawings, in which:
Figure 1a shows a perspective view of an internal area of the vehicle in which a detail of the vehicle arranged in a first position is visible;
Figure 1b shows a perspective view of an internal area of the vehicle in which the same detail of the vehicle arranged in a second position is visible;
Figures 2 and 3 show respective perspective views of a detail of the vehicle in a first configuration;
Figures 4-6 show respective perspective views of the same detail of the vehicle illustrated in Figures 2 and 3 in a second configuration;
Figures 7 and 8 show respectively front and perspective views of a different embodiment of said detail of the vehicle in a first configuration;
Figures 9 and 10 show respectively front and perspective views of a different embodiment of said detail of the vehicle in a second configuration.

### Description of embodiments of the invention

With particular reference to these figures, the numeral 1 indicates the commercial vehicle for the transport and delivery of articles 11 according to the present invention, hereinafter referred to as the vehicle for simplicity.

The vehicle 1 comprises, in a known way, a frame 2 which constitutes the structure of the vehicle 1.

The vehicle 1 comprises a driver's cabin and a containment compartment 3, suitable for containing the articles 11.

The term articles 11 means objects to be delivered, such as packages, bags, envelopes or the like, and containers in turn containing further objects to be delivered, such as packages, envelopes, bags or the like.

The driver's cabin and the containment compartment 3 may preferably be separated by a partition wall 21.

The vehicle 1 is provided with at least one access door to the containment compartment 3, for example positioned on a side or rear wall. There may be an access door on a rear wall and additional access on a vehicle side wall 1.

The driver's cabin comprises, in a known way, control means of the vehicle 1 and a seat for the delivery operator, both not shown in the figures.

The partition wall 21 can have at least one opening, closed by a respective removable door, through which the articles 11 pass from the containment compartment 3 to the driver's cabin and vice versa.

The containment compartment 3 is equipped with a shelf structure 31 designed to contain the articles 11.

In particular, the shelf structure 31 comprises at least one support element 32 of elongated shape on which the articles 11 to be delivered are arranged in use. In particular, the support element 32 is inclined with respect to a horizontal plane. The support element 32 is inclined towards the access door or towards the opening to allow the unloading, or deposit, of the articles 11 respectively from the containment compartment 3 to the external environment, or vice versa. Alternatively, the unloading, or deposit, of the articles 11 can take place from the containment compartment 3 to the driver's cabin.

The support element 32 is mounted in the containment compartment 3, in particular it is associated with a wall of the containment compartment 3.

The support element 32 can be associated with a side wall or the ceiling of the containment compartment 3. The support element 32 can also be associated with the partition wall 21. Alternatively, the support element 32 can be associated in a combined way with the side wall and / or the ceiling, and / or with the partition wall of the containment compartment 3.

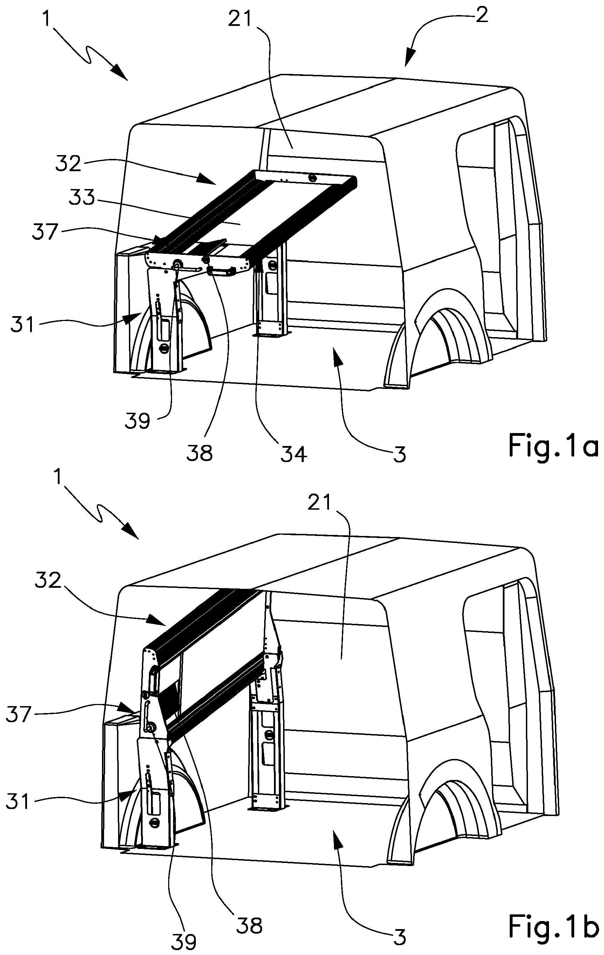

In particular, the support element 32 can assume a first operative position, in which it makes available a surface for depositing and picking up the articles 11, and a second position, in which it is leaning against a wall in such a way as to provide the operator a greater operating volume in the containment compartment 3 (see Figures 1a and 1b). More precisely, the support element 32 can be folded against a wall of the containment compartment 3 by connection means, such as hinge means. Preferably the support element 32 has gripping means to allow the operator to lean it against a wall of the containment compartment 3.

The support element 32 is mounted in the containment compartment 3 along a first longitudinal direction with respect to the vehicle 1. Alternatively, the support element 32 is arranged along a second transverse direction with respect to the longitudinal development of the vehicle 1.

Preferably the support element 32 defines a support surface 33 on which the articles 11 are arranged and comprises a peripheral frame 34. The support surface 33 can be shaped by means of one or more panels placed side by side in such a way as to create a flat support surface for the articles 11 and can, for example, have a substantially rectangular shape. The frame 34 is associated with the support surface 33 and protrudes in a substantially orthogonal direction with respect to the surface 33 itself, surrounding its perimeter. The frame 34 can, for example, have a rectangular shape and is therefore shaped by a pair of opposite longitudinal edges 35 and a pair of opposite transverse edges 36.

The longitudinal edges 35 preferably extend for the entire length of the support element 32, while the transverse edges 36 preferably extend for the entire width of the same support element 32.

In particular, in use, the longitudinal edges 35 and the transverse edges 36 act as the edge of the support element 32 keeping the articles 11 on the support surface 33. The transverse edges 36 and the longitudinal edges 35 therefore prevent the articles 11 from falling from the support element 32.

The support element 32 also comprises a blocking member 37 positioned at one end of the support element 32, preferably in proximity to a transverse edge 36 of the frame 34. The blocking member 37, in use, prevents the articles 11 from moving due to the inclination of the support element 32. In particular, the blocking member 37 comprises an operative portion 38 which comes into contact with the articles 11, holding them in position, and a control element 39, connected to the operative portion 38, on which an operator in charge of the delivery acts in the pick up or deposit step of the same articles 11.

In particular, the operative portion 38 is positioned at the support surface 33 of the articles 11. The operative portion 38 is made up of an elongated shape element, for example of the type of a rod, and develops mainly along a direction substantially parallel to the direction of the longitudinal development of the support element 32.

The operative portion 38 can be made of a material having a higher friction coefficient than the support surface 33. Preferably, the operative portion 38 occupies a part of the support surface 33 in a first configuration of the blocking member 37, as explained further below.

The control element 39 is mechanically connected to the operative portion 38 by connection means, not shown, to set the operative portion 38 in motion. The connection means can be, for example, a transmission shaft. The control element 39 is preferably shaped like a handle so that the operator can easily operate it.

Alternatively, the control element 39 can be a sensor able to send signals to the operative portion 38 to control its movement.

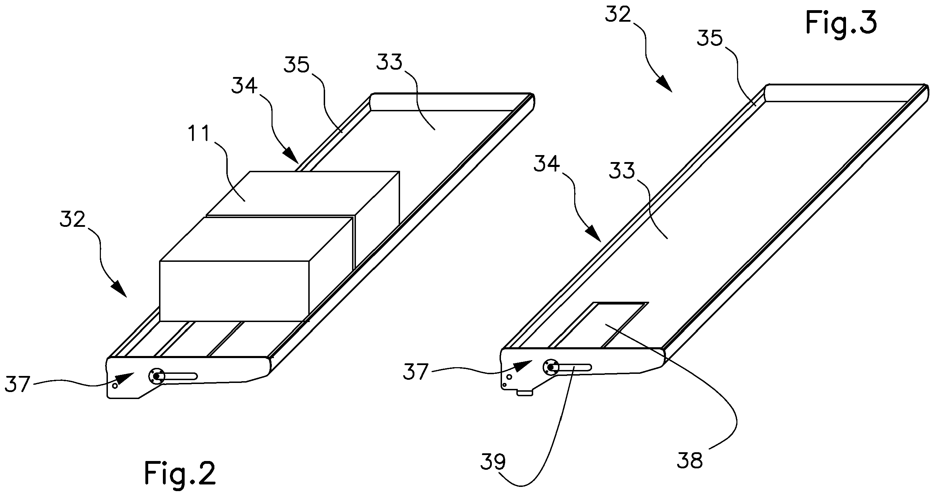

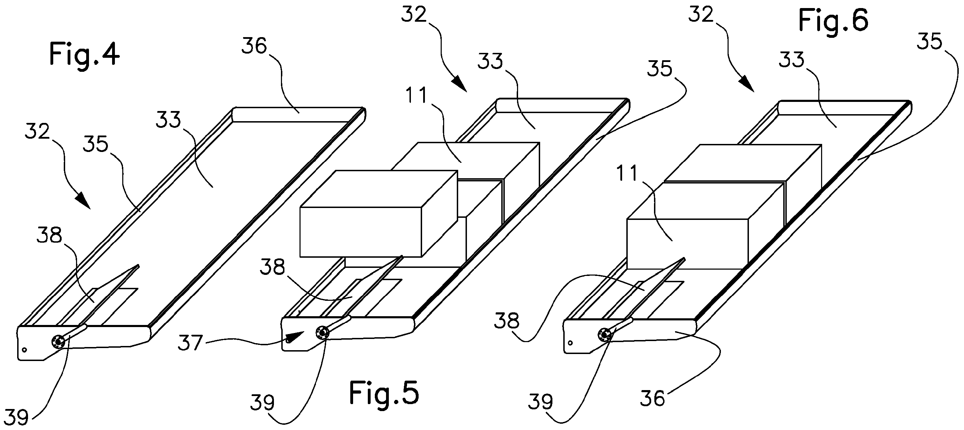

More precisely, the operator acting on the control element 39 can change the configuration assumed by the blocking member 37. In particular, the blocking member 37 assumes a first configuration in which the control element 39 is in an active position and the operative portion 38 is aligned and substantially coplanar with the supporting surface 33 so as to allow the sliding of the articles 11 on this surface 33 (see Figures 2 and 3). The operative portion 38 can assume in the first configuration, as an alternative to the substantially aligned position, a position below the supporting surface 33. As an alternative to the first configuration, the blocking member 37 can assume a second configuration in which the operative portion 38 is raised with respect to the supporting surface 33 and in which the control element 39 is in a passive position (see Figures 4-6). In this second configuration, the operative portion 38 is raised with respect to the supporting surface 33 and defines a contact surface for the articles 11. The operative portion 38 therefore alternatively assumes a lowered, retractable and aligned position with the support surface 33 of the articles 11, and a raised position with respect to the same support surface 33.

It is possible to provide that the operative portion 38 can be operated in motion between the two configurations without the use of the control element 39, for example by exerting a force directly on the operative portion 38 which causes the change in position of the operative portion 38, from a raised condition to a lowered condition or vice versa.

Contrasting means can be associated with the blocking member 37, for exerting a force on the operative portion 38 to cause the passage of the same operative portion 38 from the first configuration, in which it is lowered, to the second configuration, in which it is raised. In this case, in a condition in which the prevailing force on the operative portion 38 is the force exerted by the contrasting means, the blocking member 27 assumes the second configuration.

More precisely, in operation, the articles 11 are positioned on the support surface 33 and beyond the operative portion 38 in such a way that the operative portion 38, in the raised position, prevents the articles from sliding along the support surface 33 due to the combined effect of gravity and the inclination of the first support element 32.

According to an embodiment, the contrasting means controls the passage of the operative portion 38 from the first configuration, in which it is lowered, to the second configuration, in which it is raised, and the control element 39 controls the passage from the second configuration to the first configuration.

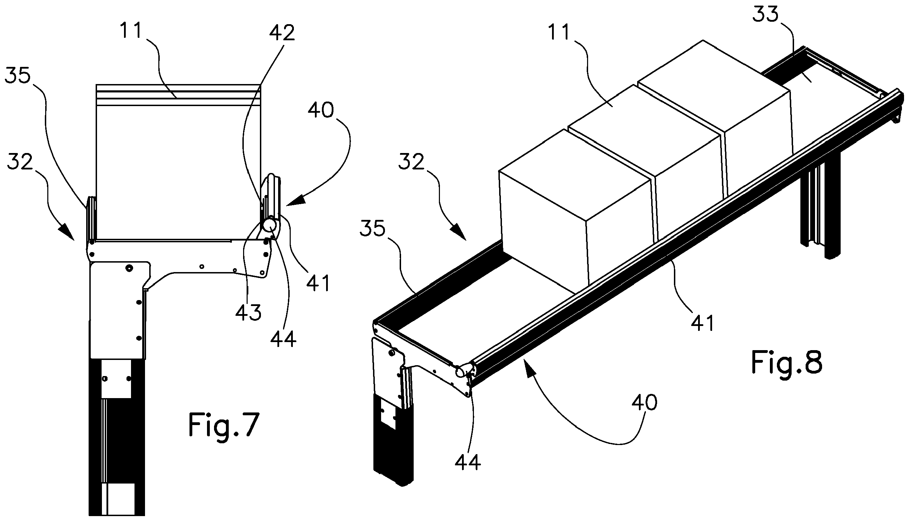

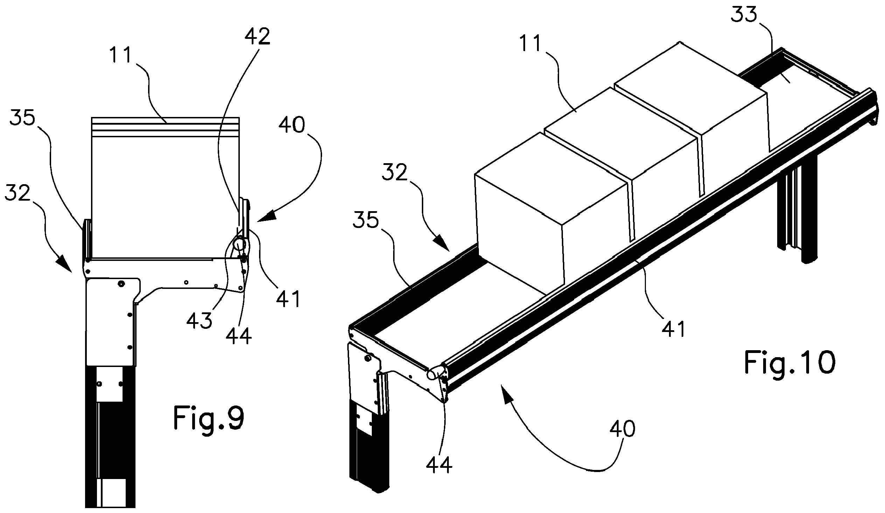

According to a different embodiment, the sliding by gravity of the articles 11 along the support surface 33, due to the inclination of the support element 32, is braked by a blocking member 40 defined longitudinally with respect to the support element 32, at the peripheral frame 34 (see Figures 7-10).

The blocking member 40 can be present either only on one side or on both sides of the support element 32, replacing one or both longitudinal edges 35.

In particular, the blocking member 40 comprises an operative element 41 of elongated shape having a rectangular section provided with an active surface 42 which is associated with a brake element 43 for generating a suitable frictional force, in operation, abutting the articles 11 and holding them in place. The brake element 43 consists, for example, of a gasket of a rubber-like material, with a relatively high coefficient of friction.

The blocking member 40 is operable by means of a control element 44 to move from a first configuration spaced from the articles 11 which allows the sliding of the articles 11 by gravity along the supporting surface 33 to a second configuration in which the brake element 43 is brought to abut the articles 11 preventing them from sliding in all directions. The control element 44 includes, by way of example, a mechanical spring, designed to push the brake element 43 to abut the articles 11 with a suitable pressure.

The active surface 42 of the blocking member 40 is made of a material suitable for producing a friction force such as to block the sliding by gravity of the articles 11 moving along the support element 32 on the support surface 33. The blocking member 40 can be extended along the entire length of the support element 32 or extend only along a portion of the support element 32.

Alternatively, the blocking member can be operated manually by the operator. The control element 44 is mechanically connected to the elongated element 41 by connection means, not shown, to set the elongated element 41 in motion. The control element 44 is preferably shaped like a knob so that the operator can operate it easily.

The operation of the vehicle for the transport and delivery of articles is easily understood from the above description.

The operator loads the articles 11 to be delivered onto the inclined support element 32. During the loading step, the delivery operator accesses the containment compartment 3 and deposits an article 11 at the operative portion 38. The weight of the article 11 positioned in this way causes the lowering of the operative portion 38 until it retracts at the level of the support surface 33. Subsequently, the operator slides the article 11 along the support surface 33 until it longitudinally exceeds the operative portion 38. When the operative portion 38 is exceeded, the operative portion 38, no longer having the weight of the article 11 which keeps it lowered, is automatically raised thanks to the contrasting means. The article 11 can therefore be released because the presence of the raised operative portion 38 prevents it from sliding towards the end of the support element 32 and, in particular, towards the operator. Subsequently, the operator can place a further article 11 at the operative portion 38, causing the weight to lower it again until it retracts completely.

During the unloading step, the operator, by removing the article placed at the operative portion 38, causes this to rise preventing a subsequent article 11 from sliding along the support surface 33. Subsequently, the operator, in order to access the article 11 stopped by the operative portion 38, acts on the control element 39 so that the operative portion 38 is lowered to the level of the support surface 33. As it is no longer prevented from sliding, the article 11 is therefore free to slide until it reaches the frame 34. In particular, the sliding of the article 11 along the support surface 33 occurs starting from zero speed, therefore the traversed section does not allow the article 11 to assume such an inertia as to risk damaging the article 11 itself when stopping, or harm the operator.

The vehicle described by way of example is susceptible of numerous modifications and variations according to the various requirements.

In the practical implementation of the invention, the materials used, as well as the shape and dimensions, can be any according to the needs.

Where the technical features mentioned in each claim are followed by reference signs, these reference signs have been included for the sole purpose of increasing the understanding of the claims and consequently they have no limiting effect on the scope of each element identified by way of reference.

## Claims

1. A vehicle for transporting and delivering articles comprising a driver's cabin and a containment compartment (3) equipped internally with a shelf structure (31) for containing said articles (11), said shelf structure (31) ) comprising at least one support element (32) for supporting a plurality of said articles (11), which is inclined with respect to a substantially horizontal plane to allow the unloading of said articles (11) using the force of gravity, said at least one support element (32) defining a support surface (33) for said articles and being associated with at least one blocking member (37) operable to prevent the sliding of said articles (11) along said support surface (33) of said support element (32).

2. The vehicle of claim 1, wherein said blocking member (37) comprises an operative portion (38) operable alternately to allow the sliding of said articles (11) along said support surface (33) of said support element (32) and to stop the sliding of said articles along said support surface (33) of said support element (32).

3. The vehicle of claim 2, wherein said operative portion (38) is arranged at said support surface (33) of said support element (32).

4. The vehicle of claim 3, wherein said operative portion (38) is rotatably connected to said support surface (33) of said support element (32).

5. A vehicle of any one of claims 2-4, wherein said blocking member (37) is movable alternatively between a first configuration, in which said operative portion (38) is substantially coplanar to said support surface (33) of said support element (32) or is underlying said support surface (33), allowing the sliding of said articles (11) along said support surface (33), and a second configuration, in which said operative portion (38) is raised with respect to said support surface (33) so as to prevent the sliding of said articles (11).

6. The vehicle of claim 5, wherein said operative portion (38) defines an abutment surface, arranged to stop the sliding of said articles in said second configuration.

7. The vehicle of claim 5 or 6, wherein said blocking member (37) is associated with contrasting means capable of exerting a force on said operative portion (38) to cause the passage of said operative portion (38) from said first configuration to said second configuration.

8. A vehicle of any one of claims 5-7, wherein said blocking member (37) comprises a control element (39), connected to said operative portion (38), said control element (39) being capable of operating said operative portion (38).

9. The vehicle of claim 8, wherein said operative portion (38) is movable between said second configuration and said first configuration upon actuation of said control element (39).

10. A vehicle of any one of the preceding claims, wherein said blocking member (37) is mounted at an end portion of said support element (32).

11. A vehicle of any one of the preceding claims, wherein said support element (32) comprises a frame (34) suitable for containing said articles (11), said frame (34) extending peripherally with respect to said support surface (33).

12. A vehicle of any one of the preceding claims, wherein said support element (32) comprises at least one panel conforming said support surface (33) of said articles (11).

13. The vehicle of any one of the preceding claims, wherein it comprises at least one access to said containment compartment (3), made at least on one of the walls delimiting said containment compartment (3), so as to unload said articles (11) from said containment compartment and/or deposit said articles (11) in said containment compartment (3).

14. A vehicle of any one of the preceding claims, wherein it comprises a blocking member (40) adapted to brake the sliding of said articles (11) along said support surface (33) of said support element (32), said blocking member (40) comprising an operative element (41) of elongated shape defined longitudinally to at least one side of said support element (32), equipped with a brake element (43) adapted to abut, in use, the said articles (11) generating a frictional force capable of braking and holding the same articles.

15. The vehicle of claim 14, wherein said blocking member (40) is operable by means of a control element (44) from a first configuration spaced from said articles (11) to allow them to slide along said support surface (33) of said support element (32) to a second configuration in which said brake element (43) is brought to abut said articles (11) preventing them from sliding.
